# EUROPÄISCHE PATENTANMELDUNG

(11) **EP 3 043 229 A1**
(43) Veröffentlichungstag der Anmeldung: **13.07.2016**
(21) Anmeldenummer: 15003638.2
(22) Anmeldetag: 21.12.2015
(51) Int. Cl.: G05D 23/13

(54) **THERMOSTATKARTUSCHE MIT DÄMPFUNGSBEREICH**

(30) Priorität: 05.01.2015 DE 102015000005
(71) Anmelder: Grohe AG, 58675 Hemer (DE)
(72) Erfinder: Kostorz, Ole Benedikt, 58706 Menden (DE); Riedel, Björn, 44879 Bochum (DE)

(57) **Zusammenfassung**

Thermostatkartusche (1), aufweisend einen in einem Kartuschengehäuse (2) ausgebildeten Mischraum (3), wobei das Kartuschengehäuse (2) zumindest einen in den Mischraum (3) mündenden Warmwasserzulauf (4) für Warmwasser, zumindest einen in den Mischraum (3) mündenden Kaltwasserzulauf (5) für Kaltwasser und mindestens einen aus dem Mischraum (3) führenden Mischwasserablauf (6) für Mischwasser aufweist, wobei in der Thermostatkartusche (1) ein Regelkörper (7) zur Einstellung eines Mischungsverhältnisses zwischen dem Warmwasser und dem Kaltwasser angeordnet ist, wobei der Regelkörper (7) entlang eines Regelwegs (8) zwischen einem Warmwasserregelspalt (9) und einem Kaltwasserregelspalt (10) verstellbar ist sowie der Regelkörper (7) mit dem Kartuschengehäuse (2) einen Kaltwasserringspalt (11) bildet, der in den Kaltwasserregelspalt (10) mündet, wobei der Kaltwasserringspalt (11) einen Dämpfungsbereich (12) umfasst, in dem der Kaltwasserringspalt (11) eine erste radiale Stärke (13) von 0,05 mm bis 0,4 mm aufweist.

## Beschreibung

Die vorliegende Erfindung betrifft eine Thermostatkartusche zur Regelung eines Mischungsverhältnisses zwischen einem Warmwasser und einem Kaltwasser zur Bereitstellung eines Mischwassers mit einer gewünschten und vorgebbaren Mischwassertemperatur. Solche Thermostatkartuschen werden insbesondere für Sanitärarmaturen für Duschen, Badewannen und/oder Waschbecken verwendet.

Thermostatkartuschen haben die Aufgabe, Kaltwasser und Warmwasser zu einem Mischwasser mit einer gewünschten und vorgebbaren Mischtemperatur zu mischen. Hierzu weisen die Thermostatkartuschen einen in einem Kartuschengehäuse ausgebildeten Mischraum auf, in dem das Warmwasser und Kaltwasser gemischt werden. Bei unbalancierten Druckverhältnissen zwischen dem Warmwasser und Kaltwasser, beispielsweise wenn das Warmwasser einen Druck von weniger als 1 bar und das Kaltwasser einen Druck von mehr als 5 bar aufweisen, neigen Thermostatkartuschen prinzipbedingt zum "Pfeifen", das aus hochfrequenten Druckschlägen in der Zuleitung des Kaltwassers resultiert. Der hohe Kaltwasserdruck erzeugt in einem Kaltwasserregelspalt der Thermostatkartuschen hohe Strömungsgeschwindigkeiten, woraus ein Unterdruck entsteht. Hierdurch schließt sich der Kaltwasserregelspalt, der durch ein Kartuschengehäuse und einen durch ein Dehnstoffelement verstellbaren Regelkörper gebildet wird, infolge der Elastizität des Dehnstoffelements, um sich dann bei kaum mehr vorhandenem Durchfluss des Kaltwassers wieder zu öffnen. Durch dieses intermittierende Schließen des Kaltwasserregelspalts resultieren Druckschläge in der Zuleitung des Kaltwassers.

Aufgabe der Erfindung ist es daher, die mit Bezug auf den Stand der Technik geschilderten Probleme zumindest teilweise zu lösen und insbesondere eine Thermostatkartusche anzugeben, mit der Druckschläge in Zuleitungen eines Kaltwassers vermeidbar sind.

Diese Aufgabe wird gelöst mit einer Thermostatkartusche gemäß den Merkmalen des unabhängigen Patentanspruchs. Weitere vorteilhafte Ausgestaltungen der Thermostatkartusche sind in den abhängig formulierten Patentansprüchen angegeben. Es ist darauf hinzuweisen, dass die in den abhängig formulierten Patentansprüchen einzeln aufgeführten Merkmale in beliebiger technologisch sinnvoller Weise miteinander kombiniert werden können und weitere Ausgestaltungen der Erfindung definieren. Darüber hinaus werden die in den Ansprüchen angegebenen Merkmale in der Beschreibung näher präzisiert und erläutert, wobei weitere bevorzugte Ausgestaltungen der Erfindung dargestellt werden.

Die erfindungsgemäße Thermostatkartusche weist einen in einem Kartuschengehäuse ausgebildeten Mischraum auf, wobei das Kartuschengehäuse zumindest einen in den Mischraum mündenden Warmwasserzulauf für Warmwasser, zumindest einen in den Mischraum mündenden Kaltwasserzulauf für Kaltwasser und mindestens einen aus dem Mischraum führenden Mischwasserablauf für Mischwasser aufweist, wobei in der Thermostatkartusche ein Regelkörper zur Einstellung eines Mischungsverhältnisses zwischen dem Warmwasser und dem Kaltwasser angeordnet ist, wobei der Regelkörper entlang eines Regelwegs zwischen einem Warmwasserregelspalt und einem Kaltwasserregelspalt verstellbar ist sowie der Regelkörper mit dem Kartuschengehäuse einen Kaltwasserringspalt bildet, der in den Kaltwasserregelspalt mündet, wobei der Kaltwasserringspalt einen Dämpfungsbereich umfasst, in dem der Kaltwasserringspalt eine erste radiale Stärke von 0,05 mm bis 0,4 mm aufweist.

Die Thermostatkartusche ist insbesondere für eine Sanitärarmatur vorgesehen, wobei die Sanitärarmatur beispielsweise für Duschen, Badewannen oder Waschbecken verwendbar ist. In einer solchen Sanitärarmatur hat die Thermostatkartusche die Aufgabe, ein Warmwasser und ein Kaltwasser in einem bestimmten Mischungsverhältnis so zu mischen, dass ein aus dem Warmwasser und Kaltwasser generiertes Mischwasser eine gewünschte und vorgebbare Mischwassertemperatur aufweist. Hierzu weist die Thermostatkartusche einen in einem Kartuschengehäuse ausgebildeten Mischraum auf. Das Kartuschengehäuse besteht bevorzugt aus Metall, insbesondere Messing. Bevorzugt weist das Kartuschengehäuse eine im Wesentlichen zylinderförmige Form auf, wobei das Kartuschengehäuse einen Außendurchmesser von ca. 2 cm (Zentimeter) bis 5 cm und eine Länge entlang einer Längsachse von bevorzugt 3 cm bis 5 cm hat. Zudem weist das Kartuschengehäuse zumindest einen in den Mischraum mündenden Warmwasserzulauf für Warmwasser und zumindest einen in den Mischraum mündenden Kaltwasserzulauf für Kaltwasser auf. Das Kaltwasser weist bevorzugt eine Kaltwassertemperatur von 5 °C bis 29 °C und das Warmwasser bevorzugt eine Warmwassertemperatur von 36 °C bis 90 °C auf. Durch den zumindest einen Warmwasserzulauf ist das Warmwasser und durch den zumindest einen Kaltwasserzulauf ist das Kaltwasser in den Mischraum leitbar.

Die Thermostatkartusche weist ferner einen Regelkörper auf, der der Einstellung eines Mischungsverhältnisses zwischen dem Warmwasser und dem Kaltwasser zur Erzeugung eines Mischwassers dient. Das Mischwasser ist aus dem Mischraum durch zumindest einen aus dem Mischraum führenden Mischwasserablauf ableitbar. Der Regelkörper ist insbesondere durch einen Temperatur-Weg-Geber, der z. B. ein Bimetall oder ein Wachsdehnstoffelement umfasst, entlang eines Regelwegs zwischen einem Warmwasserregelspalt und einem Kaltwasserregelspalt verstellbar, wobei der Regler insbesondere bei Änderung der Mischwassertemperatur eine proportionale Verstellung des Regelkörpers vornimmt. Durch diese Längenänderung öffnet oder schließt der Regler über den Regelkörper den zumindest einen Warmwasserzulauf und/oder den zumindest einen Kaltwasserzulauf. Der Regelweg des Regelkörpers erstreckt sich insbesondere parallel zu der Längsachse der Thermostatkartusche. Durch die Verstellung des Regelkörpers ist eine, insbesondere axiale, Stärke des insbesondere radial verlaufenden Warmwasserregelspalts einstellbar, sodass eine Durchflussmenge des Warmwassers durch den Warmwasserregelspalt regelbar ist. Entsprechend ist durch eine Verstellung des Regelkörpers eine, insbesondere axiale, Stärke des insbesondere radial verlaufenden Kaltwasserregelspalts einstellbar, sodass eine Durchflussmenge des Kaltwassers durch den Kaltwasserregelspalt regelbar ist. Der Regelkörper kann darüber hinaus den Warmwasserregelspalt oder den Kaltwasserregelspalt vollständig verschließen, sodass kein Warmwasser beziehungsweise Kaltwasser in den Mischraum fließen kann. Weiterhin bildet der Regelkörper mit dem Kartuschengehäuse einen Kaltwasserringspalt, der sich insbesondere ringförmig zumindest teilweise durch die Thermostatkartusche erstreckt und von zumindest einer Kaltwasseröffnung in dem Kartuschengehäuse zu dem Kaltwasserregelspalt führt. Der Kaltwasserringspalt umfasst einen Dämpfungsbereich, in dem der Kaltwasserringspalt eine erste radiale Stärke von 0,05 mm (Millimeter) bis 0,4 mm, bevorzugt 0,1 mm bis 0,2 mm aufweist. Dies bedeutet insbesondere, dass sich der Kaltwasserringspalt in dem Dämpfungsbereich im Vergleich zu Bereichen außerhalb des Dämpfungsbereichs verjüngt. Dies hat zur Folge, dass ein Unterdruck des Kaltwassers bei hohen Strömungsgeschwindigkeiten in dem Dämpfungsbereich radial auf das Regelelement wirkende Kräfte erzeugt, die nicht zu einem Schließen des Kaltwasserregelspalts führen, wodurch die hochfrequenten Druckschläge in der Zuleitung des Kaltwassers ausbleiben. Des Weiteren fährt der Regelkörper mit langsam abnehmenden Querschnitten in eine Endposition ein, wodurch es zu einer Dämpfung der Thermostatkartuschen-typischen Schwingungen im Einregelverhalten kommt.

Ebenfalls vorteilhaft ist es, wenn der Dämpfungsbereich dem Kaltwasserregelspalt in einer Strömungsrichtung des Kaltwassers vorgelagert ist. Insbesondere ist der Dämpfungsbereich dem Kaltwasserregelspalt in der Strömungsrichtung des Kaltwassers unmittelbar vorgelagert.

Zudem ist es vorteilhaft, wenn der Dämpfungsbereich eine Länge von 1 mm bis 20 mm aufweist. Die Länge des Dämpfungsbereichs bemisst sich insbesondere parallel zu der Längsachse der Thermostatkartusche.

Weiterhin ist es vorteilhaft, wenn der Kaltwasserringspalt außerhalb des Dämpfungsbereichs eine zweite radiale Stärke von 0,5 mm bis 1,5 mm aufweist.

Darüber hinaus ist es vorteilhaft, wenn eine Kante des Dämpfungsbereichs abgerundet ist. Die Kante befindet sich insbesondere in einem Bereich, in dem das Kaltwasser in den Dämpfungsbereich einströmt. Die Abrundung der Kante ist insbesondere mit einem Radius von 0,3 mm bis 1,0 mm ausgeführt.

Ebenfalls vorteilhaft ist es, wenn das Kartuschengehäuse zumindest eine in den Kaltwasserringspalt mündende Kaltwasseröffnung aufweist und die Kaltwasseröffnung mindestens eine Kerbe umfasst.

Die Erfindung sowie das technische Umfeld werden nachfolgend anhand der Figuren näher erläutert. Es ist darauf hinzuweisen, dass die Figuren eine besonders bevorzugte Ausführungsvariante der Erfindung zeigen, diese jedoch nicht darauf beschränkt ist. Dabei sind gleiche Bauteile in den Figuren mit denselben Bezugszeichen versehen. Es zeigen schematisch:
- Fig. 1:: eine Thermostatkartusche in einem Längsschnitt;
- Fig. 2:: eine vergrößerte Darstellung eines ersten Bereichs der in der Fig. 1 gezeigten Thermostatkartusche;
- Fig. 3:: eine vergrößerte Darstellung eines in der Fig. 2 gezeigten zweiten Bereichs der in der Fig. 2 gezeigten Thermostatkartusche; und
- Fig. 4:: eine Teilansicht der Thermostatkartusche in einer perspektivischen Darstellung.

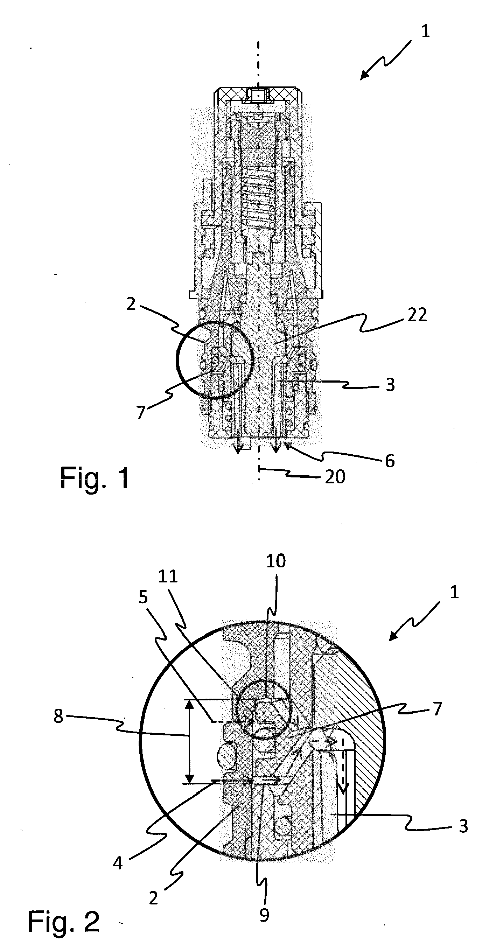

Die Fig. 1 zeigt eine Thermostatkartusche 1 in einem Längsschnitt. Die Thermostatkartusche 1 weist einen in einem Kartuschengehäuse 2 ausgebildeten Mischraum 3 auf. In dem Mischraum 3 befindet sich ein Regler 22, bei dem es sich in der hier gezeigten Ausführungsvariante um ein Wachsdehnstoffelement handelt. Mit dem Regler 22 ist in Abhängigkeit einer Mischwassertemperatur eines in dem Mischraum 3 aus einem Warmwasser und Kaltwasser gemischtem Mischwasser ein Regelkörper 7 parallel zu einer Längsachse 20 der Thermostatkartusche 1 verstellbar. Das Mischwasser kann aus dem Mischraum 3 über einen Mischwasserablauf 6 abfließen.

Die Fig. 2 zeigt eine vergrößerte Darstellung des in der Fig. 1 mit einem Kreis markierten Bereichs der Thermostatkartusche 1. Das Kartuschengehäuse 2 weist einen hier schematisch als Pfeil dargestellten Warmwasserzulauf 4 und einen hier schematisch als gestrichelten Pfeil dargestellten Kaltwasserzulauf 5 auf. Das Warmwasser fließt durch den Warmwasserzulauf 5 in einen Warmwasserregelspalt 9 und von diesem in den Mischraum 3. Das Kaltwasser fließt über den Kaltwasserzulauf 5 in einen durch das Kartuschengehäuse 2 und den Regelkörper 7 gebildeten Kaltwasserringspalt 11 und von dort über einen Kaltwasserregelspalt 10 in den Mischraum 3. Zur Einstellung eines Mischungsverhältnisses zwischen dem Warmwasser und dem Kaltwasser ist der Regelkörper 7 entlang eines Regelwegs 8 zwischen dem Warmwasserregelspalt 9 und dem Kaltwasserregelspalt 10 durch den Regler 22 verstellbar.

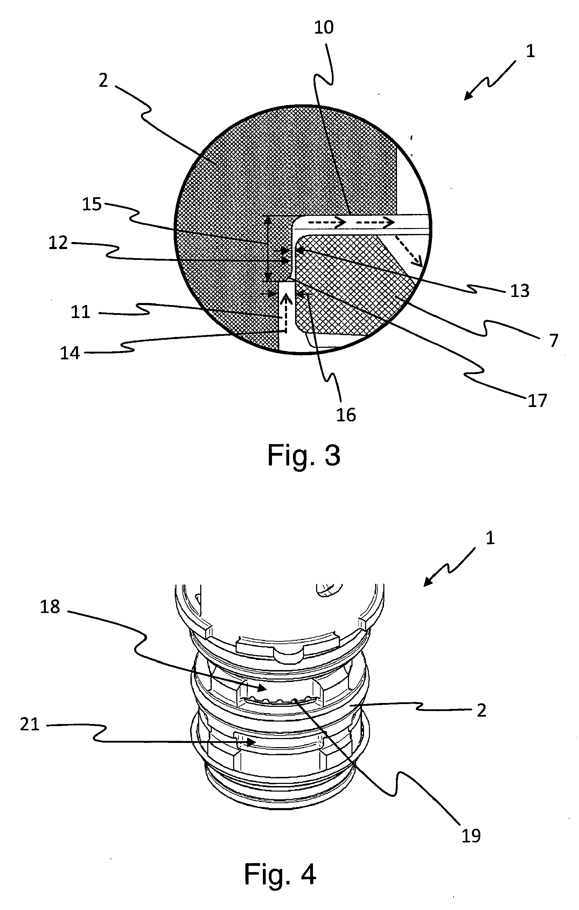

Die Fig. 3 zeigt eine vergrößerte Darstellung des in der Fig. 2 mit einem Kreis markierten Bereichs der Thermostatkartusche 1. Zu erkennen ist hier insbesondere der durch den Regelkörper 7 und das Kartuschengehäuse 2 gebildete Kaltwasserringspalt 11. Der Kaltwasserringspalt 11 mündet in den Kaltwasserregelspalt 10 und weist einen Dämpfungsbereich 12 auf, in dem der Kaltwasserringspalt 11 eine erste radiale Stärke 13 aufweist. Der Dämpfungsbereich 12 weist zudem eine Länge 15 auf, die sich parallel zu der in der Fig. 1 gezeigten Längsachse 20 der Thermostatkartusche 1 bemisst. Weiterhin ist der Dämpfungsbereich 12 in einer Strömungsrichtung 14 des Kaltwassers unmittelbar vor dem Kaltwasserregelspalt 10 ausgebildet. Darüber hinaus weist der Dämpfungsbereich 12 eine abgerundete Kante 17 auf. In Strömungsrichtung 14 des Kaltwassers vor dem Dämpfungsbereich 12 ist der Kaltwasserringspalt 11 mit einer zweiten radialen Stärke 16 ausgebildet.

Die Fig. 4 zeigt einen Teil der Thermostatkartusche 1 in einer perspektivischen Darstellung. Das Kartuschengehäuse 2 der Thermostatkartusche 1 weist eine Kaltwasseröffnung 18 und eine Warmwasseröffnung 21 auf, wobei die Kaltwasseröffnung 18 eine Vielzahl von Kerben 19 umfasst.

Durch die erfindungsgemäße Thermostatkartusche sind insbesondere hochfrequente Druckschläge in einer Zuleitung des Kaltwassers vermeidbar.

### Bezugszeichenliste

- 1: Thermostatkartusche
- 2: Kartuschengehäuse
- 3: Mischraum
- 4: Warmwasserzulauf
- 5: Kaltwasserzulauf
- 6: Mischwasserablauf
- 7: Regelkörper
- 8: Regelweg
- 9: Warmwasserregelspalt
- 10: Kaltwasserregelspalt
- 11: Kaltwasserringspalt
- 12: Dämpfungsbereich
- 13: Erste radiale Stärke
- 14: Strömungsrichtung
- 15: Länge
- 16: Zweite radiale Stärke
- 17: Kante
- 18: Kaltwasseröffnung
- 19: Kerbe
- 20: Längsachse
- 21: Warmwasseröffnung
- 22: Regler

## Patentansprüche

1. Thermostatkartusche (1), aufweisend einen in einem Kartuschengehäuse (2) ausgebildeten Mischraum (3), wobei das Kartuschengehäuse (2) zumindest einen in den Mischraum (3) mündenden Warmwasserzulauf (4) für Warmwasser, zumindest einen in den Mischraum (3) mündenden Kaltwasserzulauf (5) für Kaltwasser und mindestens einen aus dem Mischraum (3) führenden Mischwasserablauf (6) für Mischwasser aufweist, wobei in der Thermostatkartusche (1) ein Regelkörper (7) zur Einstellung eines Mischungsverhältnisses zwischen dem Warmwasser und dem Kaltwasser angeordnet ist, wobei der Regelkörper (7) entlang eines Regelwegs (8) zwischen einem Warmwasserregelspalt (9) und einem Kaltwasserregelspalt (10) verstellbar ist sowie der Regelkörper (7) mit dem Kartuschengehäuse (2) einen Kaltwasserringspalt (11) bildet, der in den Kaltwasserregelspalt (10) mündet, wobei der Kaltwasserringspalt (11) einen Dämpfungsbereich (12) umfasst, in dem der Kaltwasserringspalt (11) eine erste radiale Stärke (13) von 0,05 mm bis 0,4 mm aufweist.

2. Thermostatkartusche (1) nach Patentanspruch 1, wobei der Dämpfungsbereich (12) dem Kaltwasserregelspalt (10) in einer Strömungsrichtung (14) des Kaltwassers vorgelagert ist.

3. Thermostatkartusche (1) nach einem der vorhergehenden Patentansprüche, wobei der Dämpfungsbereich (12) eine Länge (15) von 1 mm bis 20 mm aufweist.

4. Thermostatkartusche (1) nach einem der vorhergehenden Patentansprüche, wobei der Kaltwasserringspalt (11) außerhalb des Dämpfungsbereichs (12) eine zweite radiale Stärke (16) von 0,5 mm bis 1,5 mm aufweist.

5. Thermostatkartusche (1) nach einem der vorhergehenden Patentansprüche, wobei eine Kante (17) des Dämpfungsbereichs (12) abgerundet ist.

6. Thermostatkartusche (1) nach einem der vorhergehenden Patentansprüche, wobei das Kartuschengehäuse (2) zumindest eine in den Kaltwasserringspalt (11) mündende Kaltwasseröffnung (18) aufweist und die Kaltwasseröffnung (18) mindestens eine Kerbe (19) umfasst.
